Europäisches Patentamt

(19) European Patent Office

Office européen des brevets

(11) Publication number: **0 203 459**
B1

# (12) EUROPEAN PATENT SPECIFICATION

(45) Date of publication of the patent specification:
25.07.90

(21) Application number: 86106559.7

(22) Date of filing: 14.05.86

(51) Int. Cl.⁵: **B01D 69/12,** B01D 71/26,
B01D 67/00, A61M 1/18

(54) A hydrophilic composite porous membrane, a method of producing the same and a plasma separator.

(30) Priority: 27.05.85 JP 112129/85
27.05.85 JP 112130/85

(43) Date of publication of application:
03.12.86 Bulletin 86/49

(45) Publication of the grant of the patent:
25.07.90 Bulletin 90/30

(84) Designated Contracting States:
DE FR GB SE

(56) References cited:
EP-A- 0 047 953
EP-A- 0 112 173
EP-A- 0 114 286
DE-A- 2 735 887
US-A- 3 853 601

(73) Proprietor: ASAHI MEDICAL Co., Ltd.,
1-1 Uchisaiwaicho 1-chome, Chiyoda-Ku Tokyo(JP)

(72) Inventor: Nitadori, Yoshiaki, High
Land 67-10 Miyagawauchi, Oita-shi Oita-ken(JP)
Inventor: Nakano, Toru, 510-10, Tomiyama-cho,
Nobeoka-shi Miyazaki-ken(JP)

(74) Representative: Strehl, Schübel-Hopf, Groening,
Maximilianstrasse 54 Postfach 22 14 55,
D-8000 München 22(DE)

EP 0 203 459 B1

**Description**

This invention relates to a hydrophilic composite porous membrane, a method of producing the same and a plasma separator in which the hydrophilic composite porous membrane is used. More particularly, the present invention is concerned with a hydrophilic composite porous membrane comprising a polyolefin membranous matrix having pores and at least one copolymer coat layer formed on the overall surface of the matrix. The membrane exhibits an excellent water permeability without being subjected to any pretreatment and has excellent mechanical properties in the wet state as well as in the dry state. The membrane advantageously does not contain any undesired matters, such as a surfactant, water-soluble polymer, etc. which are inevitably used for the purpose in the conventional manners. This invention is also concerned with an effective method of producing the membrane in which a copolymer solution is applied to a polyolefin membranous matrix, followed by drying. Moreover, the present invention is concerned with a plasma separator containing the above-mentioned advantageous membrane.

In the recent years, various porous membranes made of polymers are widely utilized for the ultrafiltration of aqueous solutions or the filtration of aqueous suspensions. Especially, in the industrial fields, such membranes are utilized for the production of pure water, which must be supplied in a large volume in the electronic industry, and for the removal of bacterium from the water to be used for the production of pharmaceuticals. They are also widely utilized as battery separators. In the medical fields, such membranes are utilized for the separation of blood components, removal of malignant substances from abdominal ascites and removal of foreign matters from various transfusion liquids. They are also widely utilized as various bacterium removing filters.

The porous membranes made of polymers may be, according to the property of the material, classified into two groups, namely hydrophilic porous membranes and hydrophobic porous membranes. Examples of the known hydrophilic porous membranes are cellulose porous membranes, cellulose derivative porous membranes, polyvinyl alcohol membranes, membranes made of a copolymer of ethylene and vinyl alcohol and the like. The characteristic feature of the hydrophilic porous membranes resides in that due to the hydrophilic property of the wall surfaces of pores of the membranes, they are readily wetted with water so that the filtration or ultrafiltration of an aqueous suspension or solution can be effected without any specific pretreatment. However, the hydrophilic porous membranes have such disadvantages that the mechanical strength of the membranes in the wet state is low and the membranes swell seriously with water. The hydrophilic porous membranes have also such an disadvantage that when the membranes in the wet state are dried, the performance of the membranes is apt to become poor.

Examples of the known hydrophobic porous membranes are polyethylene porous membranes, polypropylene porous membranes, polysulfone porous membranes, polytetrafluoroethylene porous membranes and the like. The hydrophobic porous membranes have such characteristic features that they swell with water only slightly and that even when the membranes are wetted, the mechanical strength of the membranes is not so much lowered. Therefore, they are widely utilized for the filtration or ultrafiltration of aqueous suspensions or solutions. However, the hydrophobic porous membranes have such drawbacks that since the hydrophobic surfaces of the membranes cannot be wetted by aqueous liquids, penetration of aqueous liquids into the pores of the membranes is difficult and hence the membranes cannot be used for the filtration or ultrafiltration of aqueous suspensions or solutions without any pretreatment. Accordingly, it has been proposed to render the hydrophobic porous membranes hydrophilic in advance. For example, to render the hydrophobic porous membranes hydrophilic, there have been proposed a method in which the pores of the hydrophobic porous membrane are filled with an organic solvent having a low surface tension and capable of being mixed with water and then the organic solvent is replaced by water, and a method in which the hydrophobic porous membrane is treated with a surface active agent, for example a surfactant comprising a silicon glycol copolymer (see U.S. Patents No. 3,853,601 and 3,929,509). However, in the former method, once the membrane is dried, for example, to effect ethylene oxide sterilization, the effect of the pretreatment is lost, thereby causing it necessary to take the same procedures once more. In the latter method, the surface active agent dissolves or is dispersed in an aqueous liquid at the time of filtration or ultrafiltration, thereby contaminating the aqueous liquid. Moreover, the latter method has such a drawback that the effect of the pretreatment for rendering hydrophilic is lost with the lapse of time.

With a view to obviating such disadvantages, proposals have been made. See, for example, Japanese Patent Application Laid-open Specification Nos. 53-21270/1978, 53-134871/1978, 54-8669/1979 and 54-17978/1979. The hydrophilic composite porous membranes disclosed in these specifications are prepared by filling the pore spaces of a hydrophobic porous membrane with an aqueous solution containing a water-soluble high polymer and insolubilizing the water-soluble high polymer by post-crosslinking treatment such as irradiation with ionizing radiation, thereby causing the polymer to be fixed to the wall surfaces of pores of the membrane. Since water soluble high polymers have a high solubility parameter whereas hydrophobic high polymers have a low solubility parameter, their affinity is low and they do not adhere to each other at all. In the methods of the above-mentioned Japanese patent application laid-open specifications, the water soluble high polymer is crosslinked to form a three-dimensional structure by posttreatment so that the water soluble high polymer may be fixed to the hydrophobic porous polymer constituting the membrane. However, the hydrophilic composite porous membrane has such a drawback that due to the use of a water soluble high polymer, the water soluble high polymer remaining uncrosslinked dissolves into the aqueous liquid at the time of filtration or ultrafiltration when the crosslinking treatment thereof is insufficiently effected. Further, the hydrophilic composite porous membranes have such a drawback that when the crosslinking degree of the water soluble polymer is high, the pore diameter of the membrane decreases, thereby causing the water permeability of the membrane to be disadvantageously lowered. Still further, from the practical point of view, the post-crosslinking treatment necessitates complicated procedures and especially, the irradiation with ionizing radiation requires a large-scale facility, causing the product cost to disadvantageously increase.

The inventors have made extensive and intensive studies to develop a hydrophilic composite porous membrane which is free from the above-mentioned drawbacks of the prior art. As a result, the inventors have unexpectedly found that a membrane comprising a polyolefin membranous matrix having pores and at least one coat layer of water-insoluble copolymer formed substantially on the overall surface of the matrix including both the surfaces of the matrix and the inner wall surfaces of the pores, which copolymer has a specific hydropholic monomeric unit content, is an excellent hydrophilic composite porous membrane which is useful for the filtration or ultrafiltration of aqueous suspensions or solutions. Based on this novel finding, the present invention has been completed.

It is, therefore, an object of the present invention to provide a hydrophilic composite porous membrane which can be used without any pretreatment for the filtration or ultrafiltration of aqueous suspensions or solutions, and which is excellent in mechanical strength in the wet state as well as in the dry state and swelling characteristics, and also excellent in safety in medical applications.

It is another object of the present invention to provide an effective method of producing such an excellent hydrophilic composite porous membrane.

It is a further object of the present invention to provide a novel plasma separator which can be used without any pretreatment and which is excellent in plasma separation ability and safety in medical applications.

The foregoing and other objects, features and advantages of the present invention will be apparent to those skilled in the art from the following detailed description and appended claims.

In one aspect of the present invention, there is provided a hydrophilic composite porous membrane comprising:

a polyolefin membranous matrix having pores which are present within the matrix in communicating relationship and form throughpaths running from one surface of the matrix to the other surface of the matrix, and

at least one copolymer coat layer formed substantially on the overall surface of the matrix including both the surfaces of the matrix and the inner wall surfaces of said pores, leaving spaces within said pores and leaving openings on both the surfaces of said matrix, said openings respectively communicating with said spaces,

said copolymer being water-insoluble and comprised of hydrophilic monomeric units and hydrophobic monomeric units, and having a hydrophilic monomeric unit content of from 40 to 90 % by weight based on the copolymer.

The hydrophilic composite porous membrane of the present invention has a structure in which substantially the overall surface of a hydrophobic polyolefin porous matrix is covered by at least one coat layer made of a copolymer comprising hydrophilic monomeric units and hydrophobic monomeric units. Due to the structure, like the hydrophobic porous membranes, the hydrophilic composite porous membrane of the present invention scarcely swells with water and the mechanical strength of the membrane scarcely decreases even when it is contacted with an aqueous solution. Further, due to the hydrophilic coat layer of the membrane, the membrane is readily wetted with water and can be used as a filter membrane for an aqueous liquid without any pretreatment for rendering the membrane hydrophilic. Still further, the dimension and performance of the membrane scarcely varies even when the membrane is repeatedly subjected to alternate wet and dry conditions. Therefore, in producing the membrane, drying can be readily effected without using a wetting agent such as glycerin, which is generally employed to prevent the structure of a hydrophilic porous membrane from undergoing disadvantageous changes. Still further, since it is unnecessary to use a surface active agent for rendering the membrane hydropholic in the present invention, the membrane of the present invention is a clean membrane that does not substantially contain any contaminants which will dissolve into and contaminate an aqueous suspension or solution to be treated.

The polyolefin membranous matrix to be employed in the present invention has pores which are present within the matrix in communicating relationship and form throughpaths running from one surface of the matrix to the other surface of the matrix. The hydrophilic composite porous membrane of the present invention comprises the matrix and at least one copolymer coat layer formed substantially on the overall surface of the matrix including both the surfaces of the matrix and the inner wall surfaces of the pores, leaving spaces within the pores and leaving openings on both the surfaces of the matrix which openings respectively communicate with the above-mentioned spaces. The terminology "overall surface of the matrix" as used herein means the sum of the inner wall surfaces of the pores contributing to permeation of the intended materials and the surfaces of both sides of the porous matrix. The composite porous membrane of the present invention is utterly different from the asymmetrical composite membrane known in the art. That is, with respect to the former, substantially the overall surface of the matrix is covered by at least one copolymer coat layer, whereas with respect to the latter, the surface of only one side of the support film is covered by a very thin film, for example, a film having a thickness of 10 to 30 nm. Moreover, the former is imparted with water permeability, whereas the latter is imparted with reverse osmosis ability.

The composite porous membrane of the present invention may be of flat form, tubular form or hollow fiber form. Of these forms, the hollow fiber form is preferred because with it, a small-sized and efficient device, for example plasma separator, can be easily produced. The composite porous membrane of the present invention preferably has an average pore diameter of 0.02 to 4.0 μm and a porosity of 30 to 90 % by volume. The average pore diameter and porosity are measured in the manners as described later in this specification.

As the polyolefin to be employed in the present invention, there may be mentioned, for example, polyethylene, polypropylene, poly-3-methylbutene-1, poly4-methylpentene-1 and copolymers prepared from two or more kinds of the monomers constituting the above mentioned polyolefins. Of them, polyethylene and polypropylene are preferably employed because a porous structure having a sufficiently large pore diameter can be easily obtained with them.

With respect to the molecular size of the polyolefin to be employed in the present invention, the polyolefin preferably exhibits a melt index of 50 or less, more preferably from 1 to 15, as measured according to ASTM D 1238.

The copolymer comprising hydrophilic monomeric units and hydrophobic monomeric units to be employed in the present invention may be any one of copolymers comprising hydrophilic monomeric units and hydrophobic monomeric units. In other words, the copolymer may be of any kind, for example, a block copolymer, a graft copolymer or a random copolymer provided that the copolymer comprises hydrophilic monomeric units and hydrophobic monomeric units.

The terminology "hydrophilic monomeric unit" as used herein means such a monomeric unit as will give a polymer which, when it is composed of only the monomeric units, is water-soluble or has wettability by water. As the preferred hydrophilic monomeric unit, there may be mentioned, for example, those from monomer compounds having a hydrophilic functional group such as a hydroxyl group, a carboxyl group, an amide group, an amino group, a sulfonic group, an oxyethylene group or the like. Specific examples of such monomeric units include those from vinyl alcohol, hydroxyethyl methacrylate, acrylic acid, acrylamide, vinylpyrrolidone, oxyethylene and the like.

The terminology "hydrophobic monomeric unit" as used herein means such a monomeric unit as will give a polymer which, when it is composed of only the monomeric units, cannot be wetted with water and of which the contact angle of distilled water on the polymer is about 70 ° or more. As the preferred hydrophobic monomeric unit, there may be mentioned, for example, those from monomer compounds having a hydrophobic functional group such as an alkyl group, an alkylene group, a halogen group, a phenyl group, a dimethylsiloxane group or the like. Specific examples of such monomeric units include those from ethylene, propylene, vinylidene fluoride, tetrafluoroethylene, vinyl chloride, vinylidene chloride, styrene, dimethysiloxane, ethylene terephthalate, bisphenol A carbonate, aminoundecanoic acid, aromatic urethanes and the like.

The hydrophilic monomeric unit content of the copolymer to be employed in the present invention is preferably in the range of 40 to 90 % by weight, more preferably 50 to 80 % by weight, based on the copolymer. When the hydrophilic monomeric unit content is less than 40 % by weight, the hydrophilic property of the copolymer is insufficient. On the other hand, when the hydrophilic monomeric unit content is more than 90 % by weight, the adhesion strength between the porous matrix made of a hydrophobic polymer and the coat layer made of the copolymer becomes poor. Among the above-mentioned hydrophobic monomeric units, ethylene units are most preferred. The copolymer comprising ethylene units exhibits a good adhesion to a polyolefin membranous matrix, especially when it is a matrix of polyethylene. Moreover, since ethylene units are chemically stable, the membrane containing ethylene units as the hydrophobic monomeric units can be advantageously utilized as the safe material for medical instruments. As the hydrophilic monomeric units, vinyl alcohol units are most preferred. Vinyl alcohol units have the simplest chemical structure among the vinyl monomer units having a hydroxyl group. Vinyl alcohol units are chemically stable and have good compatibility with a living body. Further, vinyl alcohol units have a strong hydrophilicity and therefore, even if the vinyl alcohol unit content of the copolymer is relatively small, the copolymer exhibits a sufficient hydrophilicity. Usually, vinyl alcohol units are obtained by saponifying vinyl acetate units. It is preferred that the degree of saponification be 80 % or more in order to impart the copolymer with a sufficient hydrophilicity.

As the most preferred copolymer comprising hydrophilic monomeric units and hydrophobic monomeric units, there may be mentioned, for example, a copolymer of ethylene and vinyl alcohol. With respect to the copolymer of ethylene and vinyl alcohol, it is preferred that the copolymer contain 25 to 50 % by mole of ethylene units (about 60 to 83 % by weight of vinyl alcohol units). The copolymer having such composition is preferred from the viewpoint of the balance between adhesion and hydrophilicity. The copolymer of ethylene and vinyl alcohol has the advantages as described above with respect to ethylene units and vinyl alcohol units.

The copolymer to be employed in the present invention is solid at room temperature (25 °C) and insoluble in water. The copolymer preferably has a number average molecular weight of 10,000 or more as measured according to the customary gel permeation chromatography method in which polystyrene is used as reference material.

The polyolefin membranous matrix per se generally does not exhibit any appreciable water permeability. This is due to the hydrophobicity of the matrix. The polyolefin membranous matrix comes to allow water to permeate therethrough once the pores of the matrix are wetted with an alcohol. The membrane of the present invention having at least one copolymer coat layer formed substantially on the overall surface of the matrix exhibits an excellent permeability, which is generally greater than about 50 % of the permeability exhibited by the matrix pretreated with an alcohol. Hence, the formation of the copolymer coat layer on the overall surface of the matrix including both the surfaces of the matrix and the inner wall surfaces of the pores can be readily confirmed by comparing the water permeability of a composite porous membrane with that exhibited by the matrix which has been wetted with an alcohol.

Moreover, the formation of the copolymer coat layer substantially on the overall surface of the matrix can be confirmed by the microscopic observation of the cross section of a dyed coat layer. The dyed coat layer can be obtained by adding a dye, for example methylene blue, to the copolymer solution to be applied to the polyolefin membranous matrix.

The copolymer coat layer enables the composite porous membrane comprising the hydrophilic monomeric units and hydrophobic monomeric units to exhibit a desirable permeability. However, it does not dissolve in water, aqueous solutions or suspensions or the like.

The coat layer of the composite porous membrane of the present invention covers substantially the overall surface of the matrix including both the surfaces of the matrix and the inner wall surfaces of the pores of the matrix. It is generally preferred that to ensure the sufficient water permeability of the membrane, the coat layer cover at least 70 % of the area of the overall surface. The thickness of the coat layer is preferably at least 1 nm (corresponding to the thickness of a monomolecular layer). The thickness of the coat layer can be increased as far as spaces are left within the pores and openings are left on both the surfaces of the matrix, which openings respectively communicate with the spaces. The amount of the coat layer as expressed in terms of weight per unit area of the surface of the porous matrix is preferably in the range of from about $1 \times 10^{-3}$ to about $2 \times 10$ g/m$^2$. The overall surface of the porous matrix is measured according to the method as described later in this specification.

In another aspect of the present invention, there is provided a method of producing a hydrophilic composite porous membrane comprising the steps of:

(1) applying, to a polyolefin membranous matrix having pores which are present within the matrix in communicating relationship and form throughpaths running from one surface of the matrix to the other surface of the matrix, a solution of a water-insoluble copolymer comprised of hydrophilic monomeric units and hydrophobic monomeric units and having a hydrophilic monomeric unit content of from 40 to 90 % by weight based on the copolymer in an organic solvent or a mixture of an organic solvent and water thereby to obtain a preliminary product in which said solution is attached to substantially the overall surface of said matrix, said overall surface including both the surfaces of the matrix and the inner wall surfaces of said pores; and

(2) drying said preliminary product to remove said organic solvent or mixture of an organic solvent and water so that said copolymer forms a coat layer covering substantially the overall surface of said matrix, leaving spaces within said pores and leaving openings on both the surfaces of said matrix, said openings respectively communicating with said spaces.

The above-mentioned polyolefin membranous matrix having pores to be employed in the present invention may be prepared utilizing the customary methods for preparing porous membranes, such as the wet membraneforming method, the melt phase-conversion method and the stretching perforation method. With respect to the wet membrane-forming method, reference may be made to, for example, U.S. Patent No. 3,615,024. With respect to the melt phase-conversion method, reference may be made to, for example, U.K. Patent No. 2,026,935. With respect to the stretching perforation method, reference may be made to, for example, U.S. Patents No. 3,679,538 and 3,558,764. In the stretching perforation method, a crystalline polymer is melt molded to form a hollow fiber or a film, which is subjected to cold stretching to cause cleavages among crystalline lamellae of the hollow fiber or the film and then subjected to hot stretching to attain a pore expansion of the hollow fiber or the film, thereby forming a porous membranous matrix. That is, the stretching perforation method is a method in which porous membranous matrixes are formed by physical means, i.e., stretching, without treating a polymer material with a solvent or the like, thereby not causing a problem of remaining of a solvent or the like. Therefore, the stretching perforation method is preferably employed. With respect to the structure of the porous membranous matrix produced according to the stretching perforation method, the matrix is oriented in the stretching direction of the matrix, and the pores within the matrix are elliptic in cross section taken in the stretching direction of the matrix and are defined by microfibrils that are oriented in the stretching direction of the matrix and knotted portions that are cross-connected to said microfibrils and are each in the form of stacked lamellae, which pores within the matrix include intermediate pores which are present within the matrix in communicating relationship and end pores which open at both the surfaces of the matrix. The intermediate pores and the end pores form the throughpaths running between both the surfaces of the matrix.

The organic solvent to be employed in the present invention for dissolving the copolymer comprising hydrophilic monomeric units and hydrophobic monomeric units is chosen from the ordinarily employed good solvents for high polymers. It is generally preferred that a polar organic solvent be used. When a solution made by dissolving a hydrophilic copolymer in an organic solvent having a high polarity is applied onto the surface of a hydrophobic polyolefin matrix to form a coat layer, the hydrophilic groups of high polarity appear on the surface of the coat layer, thereby rendering the surface advantageously hydrophilic. Water may be preferably added to the organic solvent for a hydrophilic copolymer in order to increase the polarity of the solvent as far as the solubility of the copolymer in the solvent is not decreased. The suitable organic solvent may be one which exhibits a solubility in water of 20 % by weight or more at a temperature lower than the boiling point of the solvent and which has a Hildebrand solubility parameter of 9.5 $(cal.cm^{-3})^{1/2}$ or more. As the organic solvent to be employed in the present invention, there may be mentioned, for example, alcohols such as methanol, ethanol, n-propanol, isopropanol, sec-butanol, t-butanol, cyclohexanol and the like; haloalcohols such as trifluoroethanol, hexafluoroisopropanol and the like; polyhydric alcohols such as ethylene glycol, propylene glycol, glycerin and the like; tetrahydrofuran; dioxane; dimethylformamide; dimethyl sulfoxide; dimethylacetamide; formamide; ethylene chlorohydrin and the like. Of these solvents, methanol, ethanol, 1-propanol, 2-propanol and dimethyl sulfoxide are most preferably used when a copolymer of ethylene and vinyl alcohol is employed for the coat layer because they are good solvents for the copolymer and their toxicity is low. The abovementioned solvents may be used alone or in the form of a mixture thereof. A mixture of one or more of the abovementioned organic solvents and water is preferably employed.

With respect to a copolymer of ethylene and vinyl alcohol, a detailed explanation will be made on the method of producing a hydrophilic composite porous membrane according to the present invention. First, the copolymer is dissolved in a solvent as mentioned above according to customary procedures to obtain a solution. The copolymer concentration of the solution may be any concentration suitable for coating. It is generally preferred, however, that the concentration be in the range of about 0.1 to 5 % by weight. The copolymer may be dissolved at a temperature which is not critical but preferably at a temperature of about 25 °C to about the boiling point of the solvent.

Next, the copolymer solution is applied to a polyolefin membranous matrix as described hereinbefore to obtain a preliminary product in which the solution is attached to substantially the overall surface of the matrix. Then, the preliminary product is dried to remove the solvent. As a result of the removal of the solvent, a coat layer of the copolymer is formed on substantially the overall surface of the matrix. However, spaces are left within the pores, and openings which respectively communicate with the spaces are left on both the surfaces of the matrix. The above-mentioned application of the copolymer solution and drying of the preliminary product may be carried out batchwise or in a continuous manner.

When the application of the copolymer solution and drying are conducted batchwise, the polyolefin membranous matrix is cut into a predetermined length in the case of a hollow fiber or tubular matrix or into a predetermined shape, for example circular shape or rectangular shape, in the case of a flat matrix. On the other hand, when the application of the copolymer solution and drying are conducted in a continuous manner, a continuous flat polyolefin membranous matrix, continuous tubular polyolefin membranous matrix or continuous hollow fiber polyolefin membranous matrix is travelled in the longitudinal direction of the matrix. Conducting the application of the copolymer solution and drying in a continuous manner is more advantageous than conducting them batchwise from the viewpoint of productivity.

The coat layer may be formed by one application of the copolymer solution followed by drying. Alternatively, the coat layer may be formed by repeating the sequence of application of the copolymer solution at a relatively low concentration, for example about 0.1 to 2 % by weight, and drying. When the copolymer solution has a high concentration of copolymer and hence a high viscosity, formation of a uniform coat layer on the overall surface of the matrix becomes difficult due to the occurrence of uneven coating of the solution and difficulty in penetration of the solution into the pores of the matrix. Therefore, repeating the sequence of application of the copolymer solution at a relatively low concentration, for example about 0.1 to 2 % by weight, and drying is generally more advantageous than conducting only one application of the copolymer solution followed by drying.

With respect to the application of the copolymer solution, the method of effecting the application is not critical. Application of the copolymer solution may be performed, for example, by coating the matrix with the copolymer solution being fed from at least one nozzle disposed around the matrix or by dipping the matrix in the copolymer solution. Further, application of the copolymer solution may be performed by spraying the solution over the matrix or by traveling the matrix on a roller having a copolymer solution layer thereon. When, for the application of the copolymer solution, a bundle of matrix pieces has been dipped in a copolymer solution and is taken out from the solution, an excess of the solution may be retained between the matrix pieces. The excess solution can be readily removed by, for example, giving vibration to the bundle.

The temperature at which the copolymer solution is applied to the polyolefin membranous matrix is not critical. However, it is generally preferred that the copolymer solution be applied at about 25 °C to a temperature which is lower than the boiling point of the solvent. In the case of the preferred solvent com-

6

prising an organic solvent and water, the copolymer solution may be applied at a temperature of about 25 °C to less than 100 °C. Generally, with the elevation of the temperature, the viscosity of the copolymer solution decreases. The decrease of the viscosity is advantageous from the viewpoint of the ease in the penetration of the copolymer solution into the porous matrix. However, at temperatures equal to or greater than the boiling point of the solvent, the evaporation of the solvent from the copolymer solution is so high that the composition of the solution is disadvantageouly changed. Application of the copolymer solution may be conducted within a period of several seconds to several tens of minutes. When the polyolefin membranous matrix is of flat form, the copolymer solution may be applied either to one side or both sides of the matrix. When the matrix is of tubular or hollow fiber form, the copolymer solution is preferably applied to only the outer surface of the matrix. Even if the copolymer solution is applied to one side of the matrix, since the matrix has a porous structure, part of the copolymer solution on the applied surface permeates into the pores of the matrix to reach the other surface of the matrix, thereby to adhere to the overall surface of the matrix.

In the composite membrane according to the present invention, the adhesion between the coat layer and the polyolefin matrix is excellent, and the surface of the coat layer has advantageously a high hydrophilicity. This is believed to be due to the unique disposition of the ethylene units and vinyl alcohol units of the copolymer. The ethylene units are nonpolar, and have a hydrophobic property as the polyolefin matrix has. Accordingly, when the copolymer solution is applied to the polyolefin matrix in the method of the present invention, the ethylene units are believed to be disposed in the coat layer so as to be in contact with the polyolefin matrix. On the other hand, the vinyl alcohol units are polar, and have a hydrophilic property as opposed to the polyolefin matrix. Accordingly, when the copolymer solution is applied to the polyolefin matrix in the method of the present invention, the vinyl alcohol units are believed to be disposed in the coat layer so as to form the surface of the coat layer remote from the polyolefin matrix. From the viewpoint of promoting the above-mentioned unique disposition, a mixed solvent of an organic solvent and water may be preferred to an organic solvent alone. Water may be added to an organic solvent to such an extent that the copolymer is no longer soluble in the mixed solvent. To increase the polarity of the mixed solvent thereby increasing the above-mentioned disposition effect, it is preferred that the amount of water be increased. The solubility of the copolymer in the mixed solvent varies depending on the ethylene unit content of the copolymer, the temperature of the solvent and other factors. In general, the amount of water is preferred in the range of 5 to 60 % by weight based on the mixed solvent.

With respect to the drying of the preliminary product, the drying may be effected according to customary drying methods, for example, vacuum drying, hot-air drying or the like. The drying may be effected at a temperature which will not cause deformation of the porous matrix coated with the copolymer solution. It is generally preferred that the temperature be not greater than 130 °C.

The hydrophilic composite porous membrane of the present invention is excellent both in mechanical strength in the wet state and in dimensional stability, and is readily wettable with water. Therefore, it may be advantageously utilized for the filtration and ultrafiltration of aqueous suspensions and solutions. It may also be advantageously utilized as a battery separator.

Moreover, the hydrophilic composite porous membrane of the present invention is advantageous from the viewpoint of the safety in medical applications since it is produced without using a surface active agent or any other material which dissolves in an aqueous liquid. Therefore, the hydrophilic composite porous membrane of the present invention can be advantageously utilized as a plasma separator, a membrane for separating plasma components, a filter for removing bacterium or the like.

Accordingly, in a further aspect of the present invention, there is provided a plasma separator comprising:
a vessel provided with a blood introduction means, a blood withdrawal means and a plasma withdrawal means; and
a plurality of porous hollow fibers which are contained within the vessel, leaving spaces between the inner surface of said vessel and said plurality of porous hollow fibers and between and inside said plurality of porous hollow fibers;
said blood introduction means and said blood withdrawal means communicating with each other through said plurality of porous hollow fibers fluidtightly connected therebetween;
said hollow fiber being adapted to pass blood therethrough while causing the plasma component of the blood to be selectively passed through the walls of the hollow fibers and withdrawn through the plasma withdrawal means;
each hollow fiber comprising:
a polyolefin membranous matrix having pores which are present within the matrix in communicating relationship and form throughpaths running from one surface of the matrix to the other surface of the matrix, and
at least one copolymer coat layer formed substantially on the overall surface of the matrix including both the surfaces of the matrix and the inner wall surfaces of said pores, leaving spaces within said pores and leaving openings on both the surfaces of said matrix, said openings respectively communicating with said spaces within said pores,
said copolymer being water-insoluble and comprised of hydrophilic monomeric units and hydrophobic monomeric units, and having a hydrophilic monomeric unit content of from 40 to 90 % by weight based on the copolymer.

The kind of the vessel to be employed in the present invention is not critical, and the vessel may be made of, for example, a material selected from various plastics such as polycarbonate, a copolymer of acrylonitrile and styrene, polystyrene and a terpolymer of acrylonitrile, butadiene and styrene. The vessel, which is provided with a blood introduction means, a blood withdrawal means and a plasma withdrawal means, is well known in the art and can be fabricated according to customary procedures.

The present invention will now be described in more detail with reference to the following Examples, which should not be construed to be limiting the scope of the present invention.

In the following Examples and Comparative Example, the properties of the polyolefin membranous matrix and hydrophilic composite porous membrane were determined according to the following methods.

(1) Average Pore Diameter ($\mu$m)

The average pore diameter was determined as follows. The pore diameter and pore volume of the membrane are measured by means of a mercury porosimeter. The logarithm of the diameter is plotted as abscissa and the pore volume is plotted as ordinate to give a pore diameter distribution curve. Thus, the total pore volume is defined by the abscissa and the pore diameter distribution curve. A vertical line can be drawn parallel to the ordinate so that the total pore volume is halved. The value of the pore diameter on the abscissa at its point crossed by the abovementioned vertical line is referred to as "average pore diameter".

(2) Water Permeability ($\ell$/hr $\cdot$ m$^2$ $\cdot$ mmHg) [$\ell$/h $\cdot$ m$^2$ $\cdot$ mbar]

The water permeability of the membrane was determined as follows. The membrane is immersed in distilled water at 25°C and at a trans-membrane differential pressure of 66.5 mbar (50 mmHg) without any pretreatment for rendering the sample hydrophilic using ethanol, and the amount of the water which has passed through the membrane is measured. The water permeability of the membrane is calculated from the amount of the water.

(3) Tensile Breaking Strength (Kgf/cm$^2$) [N/mm$^2$]

Tensile Breaking Elongation (%)

The tensile breaking strength and tensile breaking elongation were determined as follows. The membrane is subjected to a tensile test using an Instron type tensile tester at a strain rate of 200 %/min and at a temperature of 25 °C to obtain five measurement values. The values are averaged to determine the tensile breaking strength and tensile breaking elongation.

(4) Overall Surface of Porous Matrix (m$^2$/g)

The overall surface of porous matrix was determined as follows. The nitrogen gas adsorption amount of the matrix is measured using a BET (S. Brunauer-P.H. Emmett - E. Taylor) type surface area measuring apparatus, and the overall surface is determined from the nitrogen gas adsorption amount according to the customary one-point method.

(5) Porosity (% by volume)

The porosity as used herein is defined as follows.

$$\mathbf{Porosity\ (\%)} = \frac{\mathbf{pore\ volume}}{\mathbf{bulk\ volume\ of\ the\ membrane}} \times 100$$

The pore volume is measured using a mercury porosimeter. The bulk volume of the membrane is determined by making a 100-fold magnified image of the sample membrane by means of a projector and measuring the dimension of the sample, with respect to the magnified image, by means of a micrometer.

(6) Plasma Separation Rate (m$\ell$/hr $\cdot$ m$^2$ $\cdot$ mmHg) [m$\ell$/h $\cdot$ m$^2$ $\cdot$ mbar]

An ACD solution (citric acid – sodium citrate – dextrose solution)-added bovine blood having a hematocrit value of 35% is passed through the composite porous membrane at 37°C and at a transmembrane differential pressure of 39.9 mbar (30 mmHg). By measuring the volume of the separated plasma, the plasma separation rate is determined.

### (7) Hot Water Extraction Test

The composite porous membrane is immersed in the hot water maintained at 80 ± 5°C for 3 hours. The weight change of the membrane is obtained by measuring the weight of the membrane before and after the immersion.

### (8) Polymer Latex Permeability:

A polystyrene-co-butadiene latex (SBR636 manufactured and sold by Dow Chemicals Co., Ltd., U.S.A.) having an average particle diameter of 0.2 μm is used to prepare an aqueous suspension having a polymer concentration of 0.033% by weight. The obtained suspension is filtered through the composite porous membrane at a trans-membrane differential pressure of 66.5 mbar (50 mmHg). Then, the obtained filtrate is subjected to nephelometry at a wave length of 500 nm to determine the concentration of the polymer particles. From the determined concentration, there is calculated the permeability (Sc) for the polymer particles according to the equation:

$$Sc\ (\%) = Cf/Co \times 100$$

wherein Cf represents the concentration of the polymer particles in the filtrate and Co the concentration of those in the suspension before filtration.

### Example 1

A high-density polyethylene [HI-ZEX 2208J (registered trade mark) manufactured and sold by Mitsui Petrochemical Co., Japan] having a density of 0.968 g/cm$^3$ and a melt index, as measured in accordance with ASTM D1238, of 5.5 was extruded through an annular hollow fiber spinning nozzle having an annular orifice outside diameter of 33 mm and an annular orifice inside diameter of 27 mm (slit width: 3 mm) at a spinning temperature of 150 °C and a spinning rate of 400 m/min. The thus obtained preliminary hollow fiber was subjected to annealing at 120 °C for 2 hours. The annealed hollow fiber was then cold stretched at a stretching ratio of 30 % at room temperature (about 25 °C), and hot stretched at a stretching ratio of 350 % at 105 °C. Thus, there was obtained a polyethylene hollow fiber matrix having a porous structure. The obtained hollow fiber matrix had an inner diameter of 320 μm, a thickness of 45 μm and an overall surface area, as defined hereinbefore, of 21 m$^2$/g. A copolymer of ethylene and vinyl alcohol [Soarnol E (registered trade mark) manufactured and sold by Nippon Synthetic Chemical Industry Co., Ltd., Japan) having an ethylene unit content of 38 % by mole and a vinyl alcohol unit content of 72 % by weight was dissolved in a 75% by volume aqueous ethanol solution at an elevated temperature to obtain a solution containing the copolymer at a concentration of 0.5% by weight. While maintaining the copolymer solution at a temperature of 50°C, the above-obtained polyethylene hollow fiber matrix was dipped in the copolymer solution for 10 minutes. The matrix was taken out and dried by means of hot air having a temperature of 50°C for 3 hours to obtain a composite hollow fiber membrane comprising the polyethylene hollow fiber matrix and a copolymer coat layer.

The thus-obtained composite hollow fiber membrane had an inner diameter of 320 μm, a thickness of 45 μm, a porosity of 71% by volume, and an average pore diameter of 0.70 μm as measured with a mercury porosimeter. The amount of the coat layer was $3.2 \times 10^{-3}$ g/m$^2$. The obtained membrane had a good water wettability and when the membrane was immersed in water, it was readily wetted with water. Further, without any pretreatment, the obtained membrane showed an excellent water permeability, which was 5.94 ℓ/h • m$^2$ • mbar (7.9 ℓ/hr • m$^2$ • mmHg). Since the water permeability of the membrane which was pretreated with ethanol was also about 5.94 ℓ/h • m$^2$ • mbar (7.9 ℓ/hr • m$^2$ • mmHg), it was confirmed that substantially the overall surface of the matrix was covered by the copolymer coat layer. The plasma separation rate of the membrane was also as high as 63.91 ml/h • m$^2$ • mbar (85 mℓ/hr • m$^2$ • mmHg). The membrane was subjected to the hot water extraction test. As a result, the extracted proportion was found to be 0.0%, which was advantageously lower than the average extracted proportion of 0.4% and maximum extracted proportion of 1.6% as indicated in Example 3 of Japanese Patent Application Laid-open Specification No. 54-8669/1979. The tensile breaking strenght and tensile breaking elongation of the membrane in the dry state were found to be 50.0 N/mm$^2$ (510 kgf/cm$^2$) and 30%, respectively. On the other hand, the tensile breaking strength and tensile breaking elongation of the membrane in the wet state were found to be 50.7 N/mm$^2$ (517 kgf/cm$^2$) and 31%, respectively. That is, the mechanical properties of the membrane in the wet state were scarcely different from those in the dry state, and in both cases, the membrane had excellent mechanical properties. No swelling of the membrane in the lengthwise direction was observed in the wet state. Drying and wetting of the membrane were repeated 10 times, and the water permeability and mechanical properties thereof were measured. Any significant decrease of the water permeability and change of the mechanical characteristics of the membrane were not observed advantageously.

To further confirm the formation of the copolymer coat layer substantially on the overall surface of the matrix, the above procedures for producing a composite hollow fiber porous membrane were repeated except that methylene blue was added to the copolymer solution. The resulting hollow fiber membrane was transversely cut to obtain a thin piece, and the cross section of it was observed by means of an optical microscope (magnification: x 600). The microscopic observation of-the-cross section showed that a dyed coat layer was uniformly formed substantially on the overall surface of the matrix.

Example 2

A polypropylene [Noblen D-501 (registered trade mark) manufactured and sold by Sumitomo Chemical Co., Ltd., Japan], finely divided silicic acid and dibutyl phthalate were mixed at a weight ratio of 23 : 23.5 : 53.5 in a Henschel mixer and pelletized. The pellets were extruded through an annular double spinning nozzle attached to the extruder to form a hollow fiber. The dibutyl phthalate in the hollow fiber was extracted with 1,1,1-trichloroethane and then, the finely divided silicic acid in the hollow fiber was extracted with a 40 % NaOH aqueous solution, followed by washing with water and drying. Thus, there was obtained a porous polypropylene hollow fiber matrix having an inner diameter of 550 μm and a thickness of 160 μm. Various coat layers were formed on the overall surface of the polypropylene hollow fiber matrix in substantially the same manner as in Example 1 except that various kinds of copolymers of ethylene and vinyl alcohol having different ethylene unit contents ahd vinyl alcohol unit contents [Soarnol (registered trade mark) manufactured and sold by Nippon Synthetic Chemical Co., Ltd., Japan, Eval (registered trade mark) manufactured and sold by Kuraray Co., Ltd., Japan, and a copolymer obtained by saponifying to a saponification degree of more than 99 % Soarlex DH (registered trade mark) manufactured and sold by Nippon Synthetic Chemical Co., Ltd., Japan], as indicated in Table 1, were used to prepare the copolymer solution, and that the copolymer solutions were maintained at a temperature of 75 °C instead of 50 °C. With respect to the saponified Soarlex DH, however, dimethyl sulfoxide was used as the solvent in place of ethanol. Thus, there were obtained composite porous hollow fiber membranes as indicated in Table 1. The obtained composite porous hollow fiber membranes each had an average pore diameter of 0.25 μm and had high water permeabilities as indicated in Table 1.

Table 1

| No. | Coat Layer/copolymer of ethylene and vinyl alcohol | | | Water permeability $[l/hr \cdot m^2 \cdot mmHg]$ $[l/h \cdot m^2 \cdot mbar]$ |
|---|---|---|---|---|
| | Trade mark | Ethylene unit content (% by mole) | Vinyl alcohol unit content (% by weight) | |
| 1 | Soarnol Z | 29 | 79 | 4.5 (3,38) |
| 2 | Eval EP-F | 32 | 77 | 4.2 (3,16) |
| 3 | Soarnol E | 38 | 72 | 4.0 (3,00) |
| 4 | Eval EP-E | 44 | 67 | 3.2 (2,41) |
| 5 | Eval EP-G | 47 | 64 | 3.1 (2,33) |
| 6 | Soarlex DH (saponified) | 57 | 54 | 2.1 (1,58) |

Comparative Example

A copolymer of ethylene and vinyl acetate having a vinyl acetate content of 55 % by weight [Soarlex BH (registered trade mark) manufactured and sold by Nippon Synthetic Chemical Co., Ltd., Japan] and a copolymer of ethylene and vinyl acetate having a vinyl acetate content of 40 % by weight [Elvax 40 (registered trade mark) manufactured and sold by E.I. Du Pont de Nemours and Company, U.S.A.] were separately dissolved in a 80 : 20 by volume mixture of benzene and methanol and saponified with KOH to obtain a copolymer of ethylene and vinyl alcohol having a vinyl alcohol unit content of 38 % by weight (outside the scope of the present invention) and a copolymer of ethylene and vinyl alcohol having a vinyl alcohol unit content of 26 % by weight (outside the scope of the present invention), respectively. The thus obtained copolymers were separately dissolved in a 60 : 40 by volume mixture of benzene and methanol at an elevated temperature to obtain 0.5 % by weight copolymer solutions.

Substantially the same procedures as described in Example 1 were repeated except that the above solutions were used as the copolymer solution. The results are shown in Table 2. As in apparent from Table 2, the resulting composite porous membranes exhibit good water permeabilities only when the membranes were pretreated with ethanol. That is, although the membranes have spaces within the matrix pores and openings on both the surfaces of the matrix, through which spaces and openings water is permeated, the water permeabilities of the membranes are poor without the pretreatment with ethanol.

Table 2

| Copolymer | Water permeability [l/hr • m² • mmHg] [l/h • m² • mbar] | |
| --- | --- | --- |
| | without pretreatment with ethanol | after pretreatment with ethanol |
| Saponified Soarlex BH | 0.3 [0,23] | 7.8 [5,86] |
| Saponified Elvax 40 | 0.0 [0,0] | 7.8 [5,86] |

Example 3

Two sheets of flat polyethylene membrane matrixes having a porous structure were prepared according to the known method described in Example 1 of Japanese Patent Application Laid-open Specification No. 57117951/1982. A copolymer of ethylene and vinyl alcohol [Eval EP-G (registered trade mark) manufactured and sold by Kuraray Co., Ltd., Japan] having an ethylene unit content of 47 % by mole and a vinyl alcohol unit content of 64 % by weight was dissolved in two kinds of solvents as indicated in Table 3, namely, dimethyl sulfoxide (DMSO) and a mixture consisting of 20 % by volume of water and 80 % by volume of DMSO, to form solutions each containing the copolymer at a concentration of 0.5 % by weight. The polyethylene flat membranes were respectively impregnated with the thus obtained solutions at room temperature (25 °C), followed by drying. Thus, there were obtained two flat composite porous membranes having a thickness of 30 μm and an average pore diameter of 0.60 μm. The water permeabilities of the composite membranes were found to be advantageously high a shown in Table 3.

Table 3

| No. | Solvent for copolymer of ethylene and vinyl alcohol | Water permeability of composite porous membrane [l/hr • m² • mmHg] [l/h • m² • mbar] |
| --- | --- | --- |
| 1 | Dimethyl sulfoxide | 4.8 [3,61] |
| 2 | 80 % by volume aqueous dimethyl sulfoxide solution | 6.4 [4,81] |

Example 4

Polyethylene hollow fiber membranous matrixes were prepared in substantially the same manner as in Example 1. A copolymer of ethylene and vinyl alcohol [Soarnol Z (registered trade mark) manufactured and sold by Nippon Synthetic Chemical Industry Co., Ltd., Japan] having an ethylene unit content of 29% by mole and a vinyl alcohol unit content of 79% by weight was dissolved in aqueous ethanol solutions having different ethanol concentrations as indicated in Table 4 so that various solutions containing the copolymer at a concentration of 0.5% by weight were prepared. The hollow fiber matrixes were separately passed through the copolymer solutions maintained at a temperature of 60 °C in a continuous manner so that the time during which the hollow fiber matrixes were retained in the solutions was 5 minutes. Thus, the hollow fiber matrixes were impregnated with the copolymer solutions so that the copolymer solutions covered substantially the overall surface of the hollow fiber matrixes. While causing the hollow fiber matrixes to continuously travel, hot air having a temperature of 55 °C was blown onto the hollow fiber matrixes to evaporate the solvent completely. Thus there were obtained composite hollow fiber porous membranes in the dry state. The composite porous membranes each had a high water permeability as shown in Table 4.

Table 4

| No. | Solvent for copolymer of ethylene and vinyl alcohol | Water permeability of composite porous membrane [l/hr • m$^2$ • mmHg] [l/h • m$^2$ • mbar] |
|---|---|---|
| 1 | 50 % by volume aqueous ethanol solution | 6.2 [4,66] |
| 2 | 60 % by volume aqueous ethanol solution | 7.9 [5,94] |
| 3 | 75 % by volume aqueous ethanol solution | 7.5 [5,64] |
| 4 | 80 % by volume aqueous ethanol solution | 7.1 [5,34] |
| 5 | 90 % by volume aqueous ethanol solution | 6.1 [4,59] |

Example 5

A high-density polyethylene [HI–ZEX 2208J (registered trade mark) manufactured and sold by Mitsui Petrochemical Co., Japan] having a density of 0.968 g/cm³ and a melt index, as measured in accordance with ASTM D1238, of 5.5 was extruded through an annular hollow fiber spinning nozzle having an annular orifice outside diameter of 33 mm and an annular orifice inside diameter of 27 mm (slit width: 3 mm) at a spinning temperature of 150 °C and a spinning rate of 400 m/min. The thus obtained preliminary hollow fiber was subjected to annealing at 120 °C for 2 hours. The annealed hollow fiber was then subjected to the following treatments in which the hollow fiber was kept travelling to obtain a hydrophilic composite porous membrane in the form of a hollow fiber:

(1) Cold stretching:
temperature of 25°C, stretching ratio of 33%, pre-stretching feed speed of 1.5 m/min
(2) Hot stretching:
1st step
temperature of 100°C in air, stretching ratio of 300%
2nd step
temperature of 115°C in air, stretching ratio of 147% (extended stretching ratio of 440%)
(3) Heat seat:
temperature of 123°C, period of 10 sec
(4) Application of a copolymer solution:
temperature of 50°C, solution feed speed per nozzle of 0.5 ml/min
[The hollow fiber matrix kept travelling in the transverse direction was coated with a solution made by dissolving Soarnol Z (vinyl alcohol unit content of 79% by weight) in a 50% by volume aqueous n-propanol solution in a concentration of 10 g/ℓ which solution was fed from a nozzle disposed just above the matrix and a nozzle disposed just under the matrix.]
(5) Drying:
run in air at 25°C, no air blow, period of 10 sec temperature of 80°C, hot air oven, period of 15 sec
(6) Application of a copolymer solution:
Same as in (4) above
(7) Drying:
Same as in (5) above
(8) Final drying:
temperature of 100°C, hot air oven, period of 15 sec.

The resulting hydrophilic composite porous membrane in the form of a hollow fiber had an inner diameter of 340 μm and a thickness of 50 μm, and exhibited a water permeability of 6.77 ℓ/h • m² • mbar (9.0 ℓ/hr • m² • mmHg) and a permeability for 0.2 μm particle copolymer latex of 24 %.

Example 6

A high-density polyethylene [HI-ZEX 2208J (registered trade mark) manufactured and sold by Mitsui Petrochemical Co., Japan] having a density of 0.968 g/cm³ and a melt index, as measured in accordance with ASTM D1238, of 5.5 was extruded through an annular hollow fiber spinning nozzle having an annular orifice outside diameter of 33 mm and an annular orifice inside diameter of 27 mm (slit width: 3 mm) at a spinning temperature of 150 °C and a spinning rate of 400 m/min. The thus obtained preliminary hollow fiber was subjected to annealing at 120 °C for 2 hours. The annealed hollow fiber was then cold stretched at a stretching ratio of 30 % at room temperature (25 °C), and hot stretched in two steps first at a stretching ratio of 200 % at 98 °C, followed by stretching at 110 °C (extended stretching ratio in hot-stretching: 330 %). Thus, there was obtained a polyethylene hollow fiber matrix having a porous structure. The obtained hollow fiber matrix had an inner diameter of 340 μm and a thickness of 50 μm. 840 pieces of the hollow fiber matrix were bundled to form a hollow fiber matrix bundle having a length of 30 cm;s. A copolymer of ethylene and vinyl alcohol [Soarnol Z (registered trade mark) manufactured and sold by Nippon Synthetic Chemical Industry Co., Ltd., Japan) having an ethylene unit content of 29 % by mole and a vinyl alcohol unit content of 79 % by weight was dissolved in a 60 % by volume aqueous ethanol solution at an elevated temperature to prepare a solution containing the copolymer at a concentration of 0.5 % by weight. While maintaining the copolymer solution at a temperature of 50 °C, the hollow fiber matrix bundle was dipped in the copolymer solution for 5 minutes. After the removal of an excess of the copolymer solution, i.e. portion of the solution which was retained between hollow fiber pieces, by giving vibration to the matrix bundle, the resulting bundle was dried with hot air having a temperature of 55 °C for 2 hours. The treatment with the copolymer solution and the drying step were repeated to obtain a bundle of composite hollow fiber membranes having a porous structure.

The composite porous membranes of the bundle each had an inner diameter of 340 μm and a thickness of 50 μm. The water permeability of the membranes was 7.14 ℓ/h • m² • mbar (9.5 ℓ/hr • m² • mmHg) and the permeability for a polymer latex having an average particle diameter of 0.2 μm was 29%.

The composite porous membrane bundle was accommodated in a polycarbonate cylindrical vessel having an inside diameter of 18 mm and a length of 220 mm. Both ends of the bundle were fixed to the vessel with a urethane adhesive. After cutting off the outermost portions of both ends of the bundle, nozzles were attached to both ends of the bundle to obtain a composite porous membrane module. The bundle of the thus obtained module had an effective length of 20.0 cm and an effective membrane area of 0.18 m². The space in the module was filled with sterile water, and the module was subjected to high-pressure steam sterilization at 121°C for 30 minutes. Then, the performance as a plasma separator of the module was examined as follows. First, the sterile water filled in the module was replaced by physiological saline. Then, bovine blood having a hematocrit value of 35% to which an ACD solution (citric acid – sodium citrate – dextrose solution) was added as an anticoagulant was passed through the module at a rate of 60 ml/min while maintaining the membrane differential pressure at 53.2 mbar (40 mmHg). Thus, plasma was collected. The time required for collecting 400 ml of plasma and the permeability for plasma component proteins are shown in Table 5. As is apparent from the table, the module exhibited an excellent performance as a plasma separator.

## Table 5

| Time required for collecting 400 ml of plasma (min.) | Permeability for plasma component proteins [5] (%) | | | | |
|---|---|---|---|---|---|
| | Total protein | Alb [1] | IgG [2] | IgM [3] | Fib [4] |
| 22 | 98 | 98 | 99 | 100 | 98 |

Note: 1) albumin

2) immunoglobulin G

3) immunoglobulin M

4) fibrinogen

5) $\dfrac{Ci}{Co} \times 100$

wherein Co represents the concentration of each plasma component protein of the original blood as measured according to customary procedures, and
Ci represents the concentration of each plasma component protein of the 400 ml plasma separated from the original blood by means of the composite porous membrane.

Example 7

A high-density polyethylene [HI-ZEX 2208J (registered trade mark) manufactured and sold by Mitsui Petrochemical Co., Japan] having a density of 0.968 $g/cm^3$ and a melt index, as measured in accordance with ASTM D1238, of 5.5 was extruded through an annular hollow fiber spinning nozzle having an annular orifice outside diameter of 33 mm and an annular orifice inside diameter of 27 mm (slit width: 153 mm) at a spinning temperature of 150 °C and a spinning rate of 400 m/min. The thus obtained hollow fibers were subjected to annealing at 115 °C for 2 hours. The annealed hollow fibers were then cold stretched at a stretching ratio of 30 % at room temperature (25 °C) and hot stretched at a stretching ratio of 400 % at 105 °C. Thus, there were obtained hollow fiber matrixes having a porous structure. The obtained hollow fiber matrixes had an inner diameter of 330 μm and a thickness of 50 μm. Various kinds of block copolymers comprising hydrophilic monomeric units and hydrophobic monomeric units shown as in Table 6 were separately applied to the hollow fiber membrane matrixes to produce composite hollow fiber membranes having a porous structure.

A bundle of each of the obtained composite hollow fiber membranes was accommodated in a polycarbonate cylindrical vessel having an inside diameter of 24 mm. Both ends of each bundle were fixed to the vessel with a urethane adhesive to produce a composite hollow fiber membrane module in substantially the same manner as in Example 5. The bundle within the module had an effective length of 13 cm;s and an effective membrane area of 0.23 $m^2$. The module was sterilized with gaseous ethylene oxide to obtain a plasma separator. The plasma separating ability of the plasma separator was tested in substantially the same manner as in Example 5. The results, together with the hydrophilic blocks and hydrophobic blocks constituting the - copolymer of the coat layers, the hydrophilic block content and the solvent employed for preparing the composite hollow fiber membranes, are shown in Table 6.

## Table 6

| No. | Hydrophobic block | Hydrophilic block | Hydrophilic block content (% by weight) | Solvent used | Plasma separating ability (ml/min) |
|---|---|---|---|---|---|
| 1 | Polyethylene terephthalate | polyethylene glycol (Carbwax 4000) | 60 | Hexafluoro-isopropanol | 12 |
| 2 | ditto | ditto | 85 | ditto | 15 |
| 3 | Bisphenol A polycarbonate | Polyethylene glycol (Carbwax 6000) | 60 | Dioxane | 11 |
| 4 | Nylon 11 | Polyethylene glycol (Carbwax 2000) | 60 | Trifluoro-ethanol | 12 |

EP 0 203 459 B1

## Note

The block copolymer of polyethylene terephthalate and polyethylene glycol was prepared according to the melt condensation method as described in D. Coleman, J. Polym. Sci., 14, 19 (1954).

The block copolymer of bisphenol A polycarbonate and polyethylene glycol was prepared according to the solution phosgenation method as described in E.P. Gddberg, J. Polym. Sci., Part C 4, 707 (1964).

The block copolymer of nylon 11 and polyethylene glycol was prepared by heating a mixture of 50 g of 11-aminoundecanic acid, 150 g of polyethylene glycol having amino groups at both ends thereof whose molecular weight was 2000 and adipic acid which was added in a molar amount equal to the number of moles of the polyethylene glycol. The heating was effected under nitrogen at 260 °C for 4 hours.

## Claims

1. A hydrophilic composite porous membrane comprising:
a polyolefin membranous matrix having pores which are present within the matrix in communicating relationship and form throughpaths running from one surface of the matrix to the other surface of the matrix, and
at least one copolymer coat layer formed substantially on the overall surface of the matrix including both the surfaces of the matrix and the inner wall surfaces of said pores, leaving spaces within said pores and leaving openings on both the surfaces of said matrix, said openings respectively communicating with said spaces,
said copolymer being water-insoluble and comprised of hydrophilic monomeric units and hydrophobic monomeric units, and having a hydrophilic monomeric unit content of from 40 to 90 % by weight based on the copolymer.

2. A membrane according to claim 1, wherein the or each coat layer covers at least 70 % of the area of said overall surface.

3. A membrane according to claim 1 or 2, wherein said hydrophobic monomeric units are ethylene units.

4. A membrane according to any one of claims 1 to 3, wherein said hydrophilic monomeric units are vinyl alcohol units.

5. A membrane according to any one of claims 1 to 4, wherein said polyolefin is polyethylene or polypropylene.

6. A membrane according to any one of claims 1 to 5, wherein said matrix is oriented in the stretching direction of the matrix, and said pores within the matrix are elliptic in the cross section taken in the stretching direction of the matrix and are defined by microfibrils that are oriented in the stretching direction of the matrix and knotted portions that are cross-connected to said microfibrils and are each in the form of stacked lamellae, said pores within the matrix including intermediate pores which are present within the matrix in communicating relationship and end pores which open at both the surfaces of the matrix, said intermediate pores and said end pores forming the throughpaths running between both the surfaces of the matrix.

7. A membrane according to any one of claims 1 to 6, wherein said spaces have an average pore diameter of from 0.02 to 4.0 μm.

8. A membrane according to any one of claims 1 to 7, wherein said matrix is in the form of a hollow fiber.

9. A membrane according to any one of claims 1 to 7, wherein said matrix is in the form of a flat membrane.

10. A method of producing a hydrophilic composite porous membrane according to claim 1 comprising the steps of:
(1) applying, to a polyolefin membranous matrix having pores which are present within the matrix in communicating relationship and form throughpaths running from one surface of the matrix to the other surface of the matrix, a solution of a water-insoluble copolymer comprised of hydrophilic monomeric units and hydrophobic monomeric units and having a hydrophilic monomeric unit content of from 40 to 90 % by weight based on the copolymer in an organic solvent or a mixture of an organic solvent and water thereby to obtain a preliminary product in which said solution is attached to substantially the overall surface of said matrix, said overall surface including both the surfaces of the matrix and the inner wall surfaces of said pores; and
(2) drying said preliminary product to remove said organic solvent or mixture of an organic solvent and water so that said copolymer forms a coat layer covering substantially the overall surface of said matrix, leaving spaces within said pores and leaving openings on both the surfaces of said matrix, said openings respectively communicating with said spaces.

11. A method according to claim 10, wherein said solution has a copolymer concentration of from about 0.1 to about 5 % by weight, and said application of the solution is conducted at a temperature of from about 25 °C to less than 100 °C.

12. A plasma separator comprising:
a vessel provided with a blood introduction means, a blood withdrawal means and a plasma withdrawal means; and

a plurality of porous hollow fibers which are contained within the vessel, leaving spaces between the inner surface of said vessel and said plurality of porous hollow fibers and between and inside said plurality of porous hollow fibers;

said blood introduction means and said blood withdrawal means communicating with each other through said plurality of porous hollow fibers fluidtightly connected therebetween;

said hollow fiber being adapted to pass blood therethrough while causing the plasma component of the blood to be selectively passed through the walls of the hollow fibers and withdrawn through the plasma withdrawal means;

each hollow fiber comprising:

a polyolefin membranous matrix and at least one copolymer coat layer as claimed in claim 1.

**Patentansprüche**

1. Hydrophile, poröse Verbundmembran, die umfaßt :
- eine membranartige Polyolefinmatrix mit Poren, die innerhalb der Matrix miteinander in Verbindung stehen und Durchgänge bilden, die von der einen Oberfläche der Matrix zur anderen Oberfläche der Matrix verlaufen; und
- mindestens eine Copolymer-Überzugsschicht, die auf im wesentlichen der gesamten Oberfläche der Matrix, welche sowohl die beiden Matrixoberflächen als auch die Wandinnenflächen der Poren umfaßt, gebildet ist, und die in den Poren Zwischenräume und auf den beiden Matrixoberflächen Öffnungen frei läßt, wobei die Öffnungen mit den Zwischenräumen in Verbindung stehen; wobei das Copolymer wasserunlöslich ist und aus hydrophilen und hydrophoben Monomereinheiten mit einem Gehalt an hydrophilen Monomereinheiten von 40 - 90 Gew.-%, bezogen auf das Copolymer, besteht.

2. Membran nach Anspruch 1, in der Überzugsschicht oder jede der Überzugsschichten mindestens 70 % des Bereiches der Gesamtoberfläche bedeckt.

3. Membran nach Anspruch 1 oder 2, in der die hydrophoben Monomereinheiten Ethyleneinheiten sind.

4. Membran nach einem der Ansprüche 1 bis 3, in der die hydrophilen Monomereinheiten Vinylalkoholeinheiten sind.

5. Membran nach einem der Ansprüche 1 bis 4, in der das Polyolefin Polyethylen oder Polypropylen ist.

6. Membran nach einem der Ansprüche 1 bis 5, in der die Matrix in Streckrichtung der Matrix orientiert ist, und die Poren in der Matrix, in Streckrichtung der Matrix betrachtet, einen elliptischen Querschnitt aufweisen und von Mikrofibrillen, die in der Streckrichtung der Matrix orientiert sind, und von geknoteten Abschnitten, die mit den Mikrofibrillen querverbunden sind, und die Form von gestapelten Lamellen haben, begrenzt werden, wobei die Poren in der Matrix, welche sowohl die innenliegenden Poren, die in der Matrix miteinander in Verbindung stehen, als auch die Endporen, die zu den Matrixoberflächen hin offen sind, umfassen, die Durchgänge bilden, die zwischen den beiden Oberflächen der Matrix verlaufen.

7. Membran nach einem der Ansprüche 1 bis 6, in der die Zwischenräume einen mittleren Porendurchmesser von 0,02 bis 4,0 µm aufweisen.

8. Membran nach einem der Ansprüche 1 bis 7, in der die Matrix in Gestalt einer Hohlfaser vorliegt.

9. Membran nach einem der Ansprüche 1 bis 7, in der die Matrix in Gestalt einer Flachmembran vorliegt.

10. Verfahren zur Herstellung einer hydrophilen, porösen Verbundmembran nach Anspruch 1, das folgende Schritte umfaßt :
(1) das Auftragen einer Lösung eines wasserunlöslichen Copolymers, das aus hydrophilen und hydrophoben Monomereinheiten besteht, wobei der Gehalt an hydrophilen Monomereinheiten 40 bis 90 Gew.-%, bezogen auf das Copolymer beträgt, in einem organischen Lösungsmittel oder in einer Mischung aus einem organischen Lösungsmittel und Wasser, auf eine membranartige Matrix mit Poren, die innerhalb der Matrix miteinander in Verbindung stehen und Durchgänge bilden, die von einer Oberfläche der Matrix zu der anderen Oberfläche der Matrix verlaufen; zum Erzielen eines Vorprodukts, in dem die Lösung im wesentlichen auf der gesamten Oberfläche der Matrix, welche sowohl die beiden Oberflächen der Matrix als auch die Wandinnenflächen der Poren umfaßt, anhaftet, und

(2) das Trocknen des Vorprodukts, um das organische Lösungsmittel oder die Mischung aus einem organischen Lösungsmittel und Wasser zu entfernen, so daß das Copolymer eine Überzugsschicht bildet, die im wesentlichen die gesamte Oberfläche der Matrix bedeckt und Zwischenräume in den Poren und Öffnungen an den beiden Oberflächen der Matrix frei läßt, wobei die Öffnungen mit den Zwischenräumen in Verbindung stehen.

11. Verfahren nach Anspruch 10, bei dem die Copolymerkonzentration der Lösung etwa 0, 1 bis 5 Gew.-% beträgt, und das Aufbringen der Lösung bei Temperaturen von etwa 25°C bis weniger als 100°C durchgeführt wird.

12. Plasma-Trennvorrichtung, die umfaßt :
- einen Behälter, der mit einer Bluteinlaßeinrichtung, einer Blutentnahmeeinrichtung und einer Plasmaentnahmeeinrichtung versehen ist; und

- eine Vielzahl von porösen Hohlfasern, die im Behälter enthalten sind, wobei Zwischenräume zwischen der Behälterinnenfläche und der Vielzahl von porösen Hohlfasern und zwischen und innerhalb der Vielzahl von porösen Hohlfasern verbleiben;

wobei die Bluteinlaßeinrichtung und die Blutentnahmeeinrichtung miteinander über die Vielzahl von porösen Hohlfasern, die flüssigkeitsundurchlässig dazwischen angebracht sind, in Verbindung stehen; die Hohlfasern so ausgebildet sind, daß Blut durch sie strömt, während die Plasmakomponente selektiv die Wände paniert und über die Plasmaentnahmeeinrichtung abgezogen werden kann,

wobei jede Hohlfaser eine membranartige Polyolefinmatrix und mindestens eine Copolymer-Überzugsschicht wie in Anspruch 1 beansprucht, umfaßt.

## Revendications

1. Membrane poreuse hydrophile composite comprenant:

une matrice membraneuse en polyoléfine ayant des pores qui sont présents au sein de la matrice, ce qui inclut entre eux et en formant des chemins de passage allant d'une surface de la matrice à l'autre surface de la matrice, et

au moins une couche de revêtement en copolymère formée sensiblement sur toute la surface de la matrice, ce qui inclut les deux surfaces de la matrice et les surfaces intérieures des parois des pores, en laissant des espaces dans les pores et laissant des ouvertures sur les deux surfaces de la matrice, ces ouvertures communiquant respectivement avec les espaces,

ce copolymère étant insoluble dans l'eau et comprenant des motifs monomères hydrophiles et des motifs monomères hydrophobes et ayant une teneur en motifs monomères hydrophiles représentant de 40 à 90 % du poids du copolymère.

2. Membrane suivant la revendication 1, dans laquelle la ou chaque couche de revêtement recouvre au moins 70 % de l'aire de la surface totale.

3. Membrane suivant la revendication 1 ou 2, dans laquelle les motifs monomères hydrophobes sont des motifs d'éthylène.

4. Membrane suivant l'une quelconque des revendications 1 à 3, dans laquelle les motifs monomères hydrophiles sont des motifs d'alcool vinylique.

5. Membrane suivant l'une quelconque des revendications 1 à 3, dans laquelle la polyoléfine est du polyéthylène ou du polypropylène.

6. Membrane suivant l'une quelconque des revendications 1 à 5, dans laquelle la matrice est orientée dans la direction d'étirage de la matrice et les pores, au sein de la matrice, ont une section transversale elliptique considérée dans la direction d'étirage de la matrice, et sont définis par des microfibriles qui sont orientées dans la direction d'étirage de la matrice, et par des parties nouées qui sont reliées transversalement aux microfibriles et qui se présentent, chacune sous la forme de lamelles empilées, les pores au sein de la matrice comprenant des pores intermédiaires qui sont présents au sein de la matrice et qui communiquent entre eux et des pores d'extrémité qui débouchent sur les deux surfaces de la matrice, ces pores intermédiaires et ces pores d'extrémité formant les chemins de passage entre les deux surfaces de la matrice.

7. Membrane suivant l'une quelconque des revendications 1 à 6, dans laquelle les espaces ont un diamètre moyen des pores compris entre 0,02 et 4,0 µm.

8. Membrane suivant l'une quelconque des revendications 1 à 7, dans laquelle la matrice est sous la forme d'une fibre tubulaire.

9. Membrane suivant l'une quelconque des revendications 1 à 7, dans laquelle la matrice est sous la forme d'une membrane plate.

10. Procédé de fabrication d'une membrane poreuse hydrophile composite suivant la revendication 1, qui consiste:

(1) à appliquer, à une matrice membraneuse en polyoléfine ayant des pores qui sont présents au sein de la matrice et qui communiquent entre eux et forment des chemins de passage allant d'une surface de la matrice à l'autre surface de la matrice, une solution d'un copolymère insoluble dans l'eau, comprenant des motifs monomères hydrophiles et des motifs monomères hydrophobes, et ayant une teneur en motifs monomères hydrophiles représentant de 40 à 90 % du poids du copolymère, dans un solvant organique ou dans un mélange de solvant organique et d'eau, de manière à obtenir un produit préliminaire, dans lequel la solution est fixée sensiblement à toute la surface de la matrice, ce qui inclut à la fois les surfaces de la matrice et les surfaces intérieures des parois des pores ; et

(2) à sécher le produit préliminaire, pour éliminer le solvant organique ou le mélange d'un solvant organique et d'eau, de manière que le copolymère forme une couche de revêtement recouvrant sensiblement toute la surface de la matrice, en laissant des espaces au sein des pores, et en laissant des ouvertures sur les deux surfaces de la matrice, ces ouvertures communiquant respectivement avec les espaces.

11. Procédé suivant la revendication 10, dans lequel la solution a une concentration en copolymère de 0,1 à 5 % environ en poids, et l'application de la solution s'effectue à une température de 25° à moins de 100°C environ.

12. Séparateur de plasma comprenant :

un récipient muni de moyens d'introduction du sang, de moyens d'enlèvement du sang et de moyens d'enlèvement du plasma ;

et plusieurs fibres poreuses tubulaires qui sont contenues dans le récipient en laissant des espaces entre la surface intérieure du récipient et la pluralité des fibres poreuses tubulaires et entre et à l'intérieur de cette pluralité de fibres poreuses tubulaires ;

les moyens d'introduction du sang et les moyens d'enlèvement du sang communiquant l'un avec l'autre par la pluralité de fibres poreuses tubulaires, en étant reliés entre eux de manière étanche aux fluides ;

la fibre tubulaire étant destinée au passage du sang, tout en provoquant le passage sélectif du plasma du sang à travers les parois des fibres tubulaires et son enlèvement par les moyens d'enlèvement du plasma ;

chaque fibre tubulaire comprenant :

une matrice membraneuse en polyoléfine et au moins une couche de revêtement en copolymère, telle que revendiquée à la revendication 1.